# EUROPÄISCHE PATENTANMELDUNG

(11) **EP 4 383 640 A1**
(43) Veröffentlichungstag der Anmeldung: **12.06.2024**
(21) Anmeldenummer: 22211649.3
(22) Anmeldetag: 06.12.2022
(51) Int. Cl.: H04L 9/06, H04L 9/08

(54) **VERFAHREN ZUR NUTZUNG QUANTENSICHERER KOMMUNIKATION IN EINEM KOMMUNIKATIONSNETZ**

(71) Anmelder: Deutsche Telekom AG, 53113 Bonn (DE)
(72) Erfinder: GEITZ, Marc, 58089 Hagen (DE); HOLSCHKE, Oliver, 10969 Berlin (DE); BRAUN, Ralf-Peter, 12305 Berlin (DE)
(74) Vertreter: Nern, Peter-Michael

(57) **Zusammenfassung**

Die Erfindung betrifft eine Lösung zur Nutzung einer quantensicheren Kommunikation in einem dafür in geeigneter Weise ausgebildeten Kommunikationsnetz (1) unter Verwendung in dem Kommunikationsnetz (1) verteilter Zufallszahlen hoher Entropie. Die Zufallszahlen werden durch mindestens eine Zufallszahlen und jede dieser Zufallszahlen eindeutig bezeichnende Identifikatoren bereitstellende Entropiequelle (3₁; 3₂; 3ₙ) generiert. In die Verteilung der Zufallszahlen und der sie bezeichnenden Identifikatoren an Netzelemente (4₁; 4₂; 4ₙ), nämlich Netzwerkeinrichtungen oder Endgeräte, des Kommunikationsnetzes (1) wird mindestens eine Höhenplattform HAP (2₁; 2₂; 2ₙ) eines das Kommunikationsnetz (1) ausbildenden oder von diesem umfassten Mobilfunknetzes einbezogen. Mindestens einige der Netzelemente (4₁; 4₂; 4ₙ) empfangen eine Zufallszahl oder mindestens eine von mehreren Zufallszahlen zusammen mit dem sie jeweils bezeichnenden Identifikator über eine solche Zufallszahlen verteilende HAP (2₁; 2₂; 2ₙ) und eine Mobilfunkverbindung. Gemäß einem Aspekt bezieht sich die Erfindung auf die Erzeugung von Schlüsseln, welche als Nutzschlüssel zur quantensicheren Verschlüsselung von Daten auf der Anwendungsebene und/oder zur quantensicheren Netzkommunikation dienen.

## Beschreibung

Die Erfindung betrifft die Nutzung einer quantensicheren Kommunikation in einem Kommunikationsnetz unter Verwendung in dem Kommunikationsnetz verteilter Zufallszahlen hoher Entropie. Gemäß einem im Vordergrund stehenden Aspekt bezieht sich die Erfindung auf die in einem Kommunikationsnetz erfolgende Erzeugung von Schlüsseln, welche als Nutzschlüssel zur quantensicheren Verschlüsselung von Daten auf der Anwendungsebene und/oder zur quantensicheren Netzkommunikation, nämlich zur Verschlüsselung von Verbindungen und/oder von zu übertragenden Daten in einem Kommunikationsnetz dienen. Gegenstände der Erfindung sind ein entsprechendes, sich insbesondere auch durch die Art der Verteilung hierfür verwendeter Zufallszahlen auszeichnendes Verfahren und ein zur Nutzung dieses Verfahrens im Hinblick auf die Anordnung und spezielle Ausbildung einzelner Netzelemente geeignetes Kommunikationsnetz.

Im Zusammenhang mit dem im Vordergrund stehenden Aspekt der Erzeugung von Schlüsseln, welche zur Datenverschlüsselung auf Anwendungsebene (im OSI-Schichtenmodell) und/oder zur der Netzkommunikation in dem Kommunikationsnetz verwendet werden, dient dabei die Bezeichnung entsprechender Schlüssel als Nutzschlüssel deren Unterscheidung von anderen gegebenenfalls zur Absicherung von bei der Erzeugung solcher Nutzschlüssel erfolgenden Übertagungsvorgängen dienenden Schlüsseln oder Zufallszahlen. Auch bei Letzteren handelt es sich nämlich im Grunde ebenfalls um Schlüssel, aber jedenfalls um Zeichenketten, die zur Verschlüsselung verwendet werden können.

Der Absicherung der Infrastruktur von Kommunikationsnetzen sowie der darin übertragenen Daten kommt eine überragende Bedeutung zu. Insbesondere für die Wirtschaft, jedoch im Hinblick auf den Schutz von persönlichen Daten auch im Privatbereich, ist es essenziell, dass ein Zugriff auf die in einem Kommunikationsnetz übertragenen Daten nur dazu berechtigten Personen, respektive technischen Einrichtungen, möglich ist. Der Schutz der Infrastruktur eines Kommunikationsnetzes und der zwischen Elementen dieser Infrastruktur hergestellten Kommunikationsverbindungen ist einerseits zur Gewährleistung der grundsätzlichen Funktionssicherheit eines jeweiligen Kommunikationsnetzes von Bedeutung, aber außerdem vor dem Hintergrund des Vertrauens seiner Nutzer in dessen Integrität. Hierbei müssen die Nutzer nicht nur sicher sein können, dass von ihnen übertragene Daten nicht widerrechtlich ausgespäht werden, sondern auch, dass diese Daten nicht manipuliert, das heißt nicht verfälscht werden.

Ein wesentliches Element zur Gewährleistung einer entsprechenden Sicherheit stellen Verschlüsselungsverfahren dar, welche sowohl für die Verschlüsselung im Rahmen eines Kommunikationsvorgangs ausgetauschter Daten als auch zur Verschlüsslung von Steuerdaten für den Aufbau und die Aufrechterhaltung zur Übertragung dieser Daten genutzter Verbindungen dienen. Daher werden Verschlüsselungstechniken im Grunde in allen gegenwärtig bestehenden Kommunikationsnetzen in einem großen Umfang genutzt. Entsprechende Verschlüsselungstechniken haben nach heutigen Maßstäben im Laufe ihrer Entwicklung, im Hinblick auf ihre Widerstandsfähigkeit gegenüber Angriffen, ein sehr hohes Niveau erreicht.

Mit Blick auf die sich gegenwärtig beschleunigt vollziehende Entwicklung von Quantencomputern ist allerdings abzusehen, dass die bislang genutzten Verschlüsselungsverfahren bereits in naher Zukunft möglicherweise nicht mehr sicher sind. Daher gilt es bereits jetzt, Verschlüsselungsverfahren zu entwickeln, welche auch einem Angriff mit Hilfe potenziell bald in größerem Umfang verfügbarer Quantencomputer widerstehen können. Dies gilt umso mehr, als die Infrastruktur für Kommunikationsnetze typischerweise über längere Zeiträume hinweg entwickelt wird und nach ihrer Implementierung auch zumeist über viele Jahre genutzt wird. Aus diesem Grunde wurden bereits Verschlüsselungstechniken und Techniken zur Erzeugung und Verteilung von Schlüsseln entwickelt, welche sich ihrerseits ebenfalls quantenmechanischer Effekte bedienen. Man spricht in diesem Zusammenhang von Quantenkryptografie.

Selbstverständlich treffen die vorstehenden Aussagen auch auf Mobilfunknetze und auf die Entwicklung neuer Übertragungsstandards für derartige Kommunikationsnetze zu. Gegenwärtig wird sehr intensiv an der Entwicklung von 6G-Netzwerken, also an der Entwicklung der Hardware und Übertragungsstandards für Mobilfunknetze der 6. Generation gearbeitet. Insbesondere folgende Themen sind hierbei von hoher Relevanz:
- Vertrauenswürdigkeit, das heißt höhere Sicherheit, Verfügbarkeit oder Resilienz als Mobilfunknetze vorhergehender Generationen,
- Vollständige Verfügbarkeit des Netzwerks, das heißt räumlich wie zeitlich,
- weitere Performancesteigerungen,
- verbundene intelligente Systeme, das heißt automatisierte netzintrinsische künstliche Intelligenz (AI - Artificial Intelligence) für Netze und Anwendungen,
- Nachhaltigkeit, das heißt Energieeffizienz, CO₂-Effizienz und höhere Lebensdauern der 6G-Geräte,
- Cloud Technologien, das heißt bestmögliche Verknüpfung von zentralen und "Edge-Cloud" Systemen, bei gleichzeitiger Realisierung von Sicherheits- und Vertraulichkeitsanforderungen,
- intelligente Lokalisierungssysteme, aufgrund der immer höheren Mobilfunkfrequenzen.

Zur Berücksichtigung der dargelegten Sicherheitskriterien und der vorstehend genannten Anforderungen an in der Entwicklung befindliche Mobilfunknetze, wie insbesondere 6G-Netze, wird zum Beispiel über den Einsatz von Verschlüsselungsmethoden nach dem Prinzip der sogenannten homomorphen Verschlüsselung, dazu benötigte Hardware in Form entsprechender Computerchips sowie über neue Kommunikationsparadigmen (zum Beispiel Post-Shannon- oder Molecular-Communication) nachgedacht.

Die Quantenkryptografie oder auch andere zwischenzeitlich entwickelte Verschlüsselungsmethoden, wie die mangels gegenteiligen Beweises ebenfalls als quantensicher geltende Post-Quantum Cryptography (PQC), spielen jedoch bei den gegenwärtig für die Sicherung zukünftiger, gegebenenfalls auch als Teil umfassenderer Kommunikationsnetze ausgebildeter Mobilfunknetze, respektive insbesondere für die Sicherung von 6G-Netzen, diskutierten Ansätzen, soweit ersichtlich, eine eher untergeordnete Rolle. In Bezug auf die Quantenkryptografie mag dies möglicherweise daran liegen, dass Quantenzustände, jedenfalls nach derzeitigem Stand, über Mobilfunknetze nicht verteilt werden können. Insoweit sind sich der Quantenkryptografie bedienende Konzepte im Wesentlichen im Zusammenhang mit der Sicherung der Kommunikationsverkehre zwischen dem Backbone-Netz und den Zugangsnetzen von Mobilfunknetzen diskutiert worden. Darüber hinaus wird insbesondere die Verwendung des Prinzips der Netzwerckodierung diskutiert, um drahtlose Kommunikationsnetze semantisch sicher zu verschlüsseln.

Aufgabe der Erfindung ist es, eine mögliche Alternative zur Absicherung ein Mobilfunknetz umfassender Kommunikationsnetze, aufzuzeigen. Hierzu sollen ein Verfahren zur Nutzung einer quantensicheren Kommunikation in einem Kommunikationsnetz unter Verwendung in dem Kommunikationsnetz verteilter Zufallszahlen hoher Entropie aufgezeigt und ein zur Nutzung dieses Verfahrens geeignetes Kommunikationsnetz beschrieben werden.

Die Aufgabe wird durch ein Verfahren mit den Merkmalen des Patentanspruchs 1 gelöst. Ein die Aufgabe lösendes, für die Durchführung des Verfahrens geeignetes Kommunikationsnetz wird durch den unabhängigen Sachanspruch charakterisiert. Vorteilhafte Aus- und Weiterbildungen der Erfindung sind durch die jeweiligen Unteransprüche gegeben.

Die vorgeschlagene Lösung geht, der Aufgabe folgend, von einem Kommunikationsnetz aus, dessen Bestandteil ein Mobilfunknetz ist oder welches durch ein solches Mobilfunknetz mit einer Mehrzahl von Netzelementen, nämlich Netzwerkeinrichtungen und Endgeräten, ausgebildet ist, wobei das Mobilfunknetz neben sich am Boden befindenden Netzwerkeinrichtungen, wie insbesondere einer Mehrzahl von Basisstationen, mindestens eine mit Netzwerkeinrichtungen für den Mobilfunk ausgestattete Höhenplattform HAP (HAP = High Altitude Platform) umfasst. Die Nutzung einer quantensicheren Kommunikation in dem Kommunikationsnetz wird durch die Verwendung in dem Kommunikationsnetz verteilter Zufallszahlen hoher Entropie ermöglicht, welche jeweils zusammen mit einem sie eindeutig bezeichnenden Identifikator von einer sie bereitstellende Entropiequelle generiert werden. Dabei wird in die Verteilung der Zufallszahlen und der jeweils eine dieser Zufallszahlen eindeutig bezeichnenden Identifikatoren an Netzelemente, nämlich Netzwerkeinrichtungen oder Endgeräte, des Kommunikationsnetzes mindestens eine HAP des das Kommunikationsnetz ausbildenden oder von diesem umfassten Mobilfunknetzes einbezogen.

Gemäß einem möglichen, bei den nachfolgenden Erläuterungen stärker in den Vordergrund gestellten Aspekt der Lösung werden mittels des im Rahmen dieser Lösung vorgeschlagenen Verfahrens Nutzschlüssel für das vorgenannte Kommunikationsnetz erzeugt, nämlich Schlüssel für eine quantensichere Verschlüsselung von Daten auf der Anwendungsebene und/oder zur quantensicheren Netzkommunikation, das heißt zur Verschlüsselung von Verbindungen in dem Kommunikationsnetz (einschließlich der Verwendung kryptographischer Protokolle) und/oder über diese übertragener Daten. Aus den Zufallszahlen, in deren Verteilung, wie gesagt, mindestens eine HAP des Mobilfunknetzes einbezogen ist, müssen aber - und insoweit ist die Erfindung deutlich weiter gefasst - nicht zwingend der Kryptografie dienende Nutzschlüssel erzeugt werden. Vielmehr können auch die, jeweils durch einen Identifikator eindeutig bezeichneten Zufallszahlen selbst zur Ermöglichung einer quantensicheren Kommunikation (auf zumindest einer Ebene des OSI-Schichtenmodells verwendet werden, nämlich zum Beispiel im Rahmen der Nutzung spezieller Protokolle, wie der Netzwerkkodierung (Network Coding) oder Post Shannon'scher Kommunikationsprotokolle. Ungeachtet ihrer jeweiligen Verwendung können auch die Zufallszahlen bei ihrer Verteilung mittels beliebiger klassischer und/oder PQ-kryptographischer Verfahren (PQC) verschlüsselt werden, so dass die Zufallszahlen keinem Angreifer zur Kenntnis gelangen. Dies führt zu einer weiteren Erhöhung der Sicherheit des Verfahrens und eines für dessen Durchführung ausgebildeten, respektive das Verfahren nutzenden Kommunikationsnetzes.

Nachfolgend soll etwas näher auf den Aspekt einer quantensicheren Kommunikation unter Verwendung von Nutzschlüsseln eingegangen werden, welche aus den unter Einbeziehung mindestens einer HAP verteilten Zufallszahlen erzeugt werden. Ein jeweiliger solcher Nutzschlüssel wird hierbei identisch dezentral, nämlich lokal von mehreren Netzelementen, also Netzwerkeinrichtungen oder Endgeräten des Kommunikationsnetzes, erzeugt. Dies geschieht, indem die betreffenden Netzelemente einen entsprechenden Nutzschlüssel in gleicher Weise (nach einer identischen Vorschrift) unter Anwendung eines Shared Secret, nämlich eines bei den Netzelementen vorliegenden gemeinsamen Geheimnisses, mit Hilfe einer Key Derivation Function aus mindestens einer Zufallszahl erzeugen, welche von der schon angesprochenen, mindestens einen Entropiequelle generiert und den daraus den Nutzschlüssel erzeugenden Netzelementen über das Kommunikationsnetz zugeleitet wird.

Bei einer solchen KDF kann es sich beispielsweise um eine bitweise XOR-Verknüpfung zwischen der mindestens einen Zufallszahl und dem Shared Secret handeln. Im Hinblick auf die einer bitweisen XOR-Verknüpfung anhaftenden Probleme (beispielsweise bei der Verknüpfung zweier identischer Zahlen oder von zwei Bitfolgen, bei denen alle einzelnen Bits einer der Bitfolgen invers zu den einzelnen Bits der anderen Bitfolge sind) und auf die relative Einfachheit dieser Operation, sollte indessen zu weiteren Erhöhung der Sicherheit als Prozessierungsvorschrift zur Verrechnung der Zufallszahl hoher Entropie mit dem Shared Secret vorzugsweise eine durch das NIST (National Institute of Standards and Technology) standardisierte Key Derivation Function (KDF) verwendet werden.

Bevor später nochmals auf das zuvor genannte Shared Secret eingegangen wird, sei an dieser Stelle angemerkt, dass es sich bei diesem gemeinsamen Geheimnis (der identische Nutzschlüssel lokal erzeugenden Netzelemente) im einfachsten Falle um eine Information oder eine in den Netzelementen fest implementierte Vorschrift dazu handeln kann, welche identische Key Derivation Function (KDF) von den Netzelementen jeweils zur Erzeugung des Nutzschlüssels verwendet wird.

Bei der mindestens einen zur Erzeugung eines jeweiligen Nutzschlüssels mit Hilfe der Key Derivation Function verwendeten Zufallszahl handelt es sich um eine Zufallszahl, welche durch die Nutzschlüssel lokal erzeugenden Netzelemente unmittelbar oder mittelbar - vorzugsweise unmittelbar - von einer Zufallszahlen verteilenden Höhenplattform (HAP) des Mobilfunknetzes empfangen wird. Soweit ein einen Nutzschlüssel lokal erzeugendes Netzelement die mindestens eine dafür benötigte Zufallszahl mittelbar von einer Zufallszahlen hoher Entropie verteilenden HAP empfängt, meint dies, dass das betreffende Netzelement die Zufallszahl über ein oder mehrere weitere (andere) Netzelemente des Kommunikationsnetzes empfängt, von denen jedoch eines diese Zufallszahl seinerseits wiederum direkt von einer HAP des Mobilfunknetzes empfängt. In jedem Falle ist gemäß der vorgeschlagenen Lösung in die Übermittlung mindestens einer der von Netzelementen zur Erzeugung eines jeweiligen Nutzschlüssels verwendeten Zufallszahlen eine zur Entropieverteilung (Verteilung von Zufallszahlen hoher Entropie) ausgebildete HAP des Mobilfunknetzes einbezogen.

Die vorgeschlagene Lösung bezieht sich also auf eine aktive Einbeziehung von in Mobilfunknetzen kommender Generationen umfassten Einrichtungen, namentlich von mit Netzwerkeinrichtungen für den Mobilfunk ausgestatteten HAPs für die Entropieverteilung (Verteilung von Zufallszahlen hoher Entropie), vorzugsweise (aber nicht zwingend) zum Zweck der dezentralen Erzeugung von Schlüsseln (Nutzschlüsseln) für eine gegen Angriffe mit Quantencomputern gesicherte Kommunikation oder Verwendung von Daten auf der Anwendungsebene des OSI-Modells.

Im Zusammenhang mit der Erzeugung von Nutzschlüsseln aus den verteilten Zufallszahlen ist darauf hinzuweisen, dass die jeweils identische Nutzschlüssel erzeugenden Netzelemente die Nutzschlüssel, wie vorstehend, ausgeführt aus mindestens einer Zufallszahl (hoher Entropie), also gegebenenfalls auch aus mehreren Zufallszahlen erzeugen. Hierbei verwenden selbstverständlich alle identische Nutzschlüssel erzeugenden Netzelemente dieselben Zufallszahlen, wobei ihnen aber jedenfalls mindestens eine dieser Zufallszahlen über eine HAP des Mobilfunknetzes zugeleitet wird. Dies schließt indes nicht aus, dass andere der zur Erzeugung eines jeweiligen Nutzschlüssels verwendeten Zufallszahlen die betreffenden Netzelemente über einen nicht über eine HAP geführten Übertragungspfad erreichen.

Aus den vorangegangenen Erläuterungen ist zu entnehmen, dass Netzelemente, welche Zufallszahlen von HAPs empfangen, diese unterschiedlich nutzen können. So kann etwa ein lokal aus den Zufallszahlen Nutzschlüssel erzeugendes Netzelement auch zur Bereitstellung eines als Key as a Service (KaaS) zu bezeichnenden Dienstes genutzt werden, welcher Netzwerkteilnehmer und Netzwerkeinrichtungen entsprechend ihres Bedarfs auf Anforderung oder fortwährend, aufgrund eines Abonnements oder dergleichen mit Nutzschlüsseln für eine quantensichere Verschlüsselung versorgt. Oder, ein Netzelement, über welches ein Nutzschlüssel erzeugendes Netzelement Zufallszahlen empfängt, kann als "Seed", das heißt als Zwischenspeicher, für Zufallszahlen fungieren, in welchem die verteilten Zufallszahlen in einer entsprechend gesicherten Umgebung zunächst zwischengespeichert und später weiter verteilt werden. Darüber hinaus kann ein Netzelement auch als Zwischenspeicher für Zufallszahlen dienen, die nachfolgend für Netzwerk Coding Protokolle zur Ermöglichung sicherer Datenübertragung, für kryptografische Protokolle, wie Obvious Transfer, zur Sicherung der Privatheit (Privacy) von Berechnungen oder bei der Datenspeicherung oder für alternative Kommunikationsprotokolle verwendet werden. In jedem Falle wird mit den einzelnen Zufallszahlen jeweils ein diese eindeutig bezeichnender Identifikator ausgesendet, weitergeleitet (verteilt) und gegebenenfalls in einem Netzelement zwischengespeichert.

Das Verfahren kann so ausgestaltet sein, dass eine, respektive jede Zufallszahlen hoher Entropie verteilende HAP des Mobilfunknetzes die Zufallszahlen gemeinsam mit jeweils eine dieser Zufallszahlen eindeutig bezeichnenden Identifikatoren über einen Broadcastkanal des Mobilfunknetzes oder über physikalisch geteilte Kanäle des Mobilfunknetz-Protokollstacks an Netzelemente des Mobilfunknetzes aussendet. Die Zufallszahlen hoher Entropie werden an zentraler Stelle - durch eine oder einige Entropiequellen - generiert und unter Einbeziehung einer oder mehrerer dazu ausgebildeter, sich auf einer geostationären Position einige Kilometer über der Erde befindender HAPs gewissermaßen in der Art eines "Entropieregens" an die sie nutzenden, respektive sie weiterverarbeitenden Netzelemente verteilt.

Derartige HAPs, welche nach dem derzeitigen Stand der Entwicklung bei der Realisierung künftiger 6G-Mobilfunknetze im größeren Umfang als Träger von Netzwerkeinrichtung zum Einsatz kommen sollen, können als jeweils einzelne HAP zum Beispiel arbeiten als
- spezielle Versorgungsstation für Metropolregionen, inklusive Kommunikations-offloading, Multiple Input / Output, Vehicle2X Kommunikation und Drohnensteuerung
   oder als
- Relay-Station, um die Verbindung zwischen Metropolnetzen, Lang Haul Netzwerken und Data Centers sicherzustellen, wobei eine entsprechende Relay-Station hierzu mit Bodenstationen/Basisstationen oder Satelliten über Mobilfunk-, Richtfunk oder Laser Links verbunden wird.

Entsprechend einer bevorzugten Implementierung des Verfahrens ist es zudem vorgesehen, dass die Zufallszahlen hoher Entropie durch eine Entropiequelle der mindestens einen diese verteilenden HAP oder mindestens einer von mehreren Zufallszahlen verteilenden HAPs generiert werden. Demnach ist vorzugsweise, nämlich bei einer solchen Implementierung des Verfahrens, mindestens eine HAP des Mobilfunknetzes nicht nur mit entsprechenden Mobilfunkeinrichtungen, respektive Netzwerkeinrichtungen des Mobilfunks, sondern darüber hinaus mit einer Zufallszahlen hoher Entropie generierenden Entropiequelle ausgestattet. Darüber hinaus können die zur Gewährleistung einer quantensicheren Kommunikation, beispielsweise zur Erzeugung von Nutzschlüsseln verwendeten Zufallszahlen hoher Entropie und sie bezeichnende Identifikatoren aber auch durch eine von einem in das Kommunikationsnetz eingebundenen Satelliten mitgeführte Entropiequelle und/oder durch eine Basisstation des Mobilfunknetzes (mit einer Entropiequelle) erzeugt werden.

Unabhängig davon, ob eine im Zusammenhang mit der Durchführung des Verfahrens genutzte Entropiequelle in einer HAP angeordnet, respektive als Teil einer HAP ausgebildet, ist oder nicht, wird jede der von ihr generierten Zufallszahlen vorzugsweise mit einer die sie generierende Entropiequelle eindeutig bezeichnenden Signatur versehen, ausgesendet und verteilt. Hierdurch ist es seitens der die Zufallszahlen empfangenden und aus ihnen Nutzschlüssel erzeugenden Netzelemente stets möglich, den jeweiligen Ursprung einer Zufallszahl festzustellen. Darüber hinaus ist es vorzugsweise außerdem vorgesehen, dass die Zufallszahlen durch dafür ausgebildete Einrichtungen der jeweiligen Entropiequelle validiert, nämlich hinsichtlich der Güte der Entropie überprüft werden. Zur Erhöhung der Sicherheit des Verfahrens kann es zudem vorgesehen sein, dass für die Sicherung der Übertragung der Zufallszahlen selbst ein Verschlüsselungs- und Authentifizierungsverfahren zum Einsatz kommt.

Selbstverständlich werden nicht alle Netzelemente eines Kommunikationsnetzes, welche zu übertragende Daten oder die dazu dienenden Verbindungen durch Verschlüsselung sichern, hierzu identische Schlüssel verwenden. Vielmehr werden typischerweise jeweils Gruppen von Netzelementen, die - in Bezug auf Endgeräte - beispielsweise zum selben Inhaber oder zur selben Organisationsstruktur gehören oder Gruppen, wie die Basisstation eines Zugangsnetzes zum Mobilfunknetz und ein das entsprechende Zugangsnetz an das in der Regel glasfaserbasierte Kernnetz, respektive an das Festnetz anbindender Edge-Router, gemeinsame, das heißt identische Nutzschlüssel verwenden und diese dafür in derselben Weise erzeugen.

Demnach sind die Netzelemente einer solchen, zwei oder mehr Netzelemente umfassenden Gruppe, welche die mindestens eine Zufallszahl oder mindestens eine von mehreren Zufallszahlen, wie bereits ausgeführt, von einer diese verteilenden HAP empfangen, dazu ausgebildet, aus der mindestens einen von ihnen empfangenen Zufallszahl, nämlich derselben Zufallszahl, in gleicher Weise unter Anwendung eines bei allen Netzelementen der Gruppe vorliegenden Shared Secret mit Hilfe derselben KDF einen identischen Nutzschlüssel zu erzeugen.

Entsprechend einer bereits angesprochenen Implementierung des Verfahrens können zur lokalen Erzeugung eines Nutzschlüssels durch die dafür ausgebildeten Netzelemente jeweils auch mehrere Zufallszahlen hoher Entropie verwendet werden. Besonders bevorzugt ist es hierbei, wenn diese mehreren Zufallszahlen über disjunkte Netzwerkpfade des Kommunikationsnetzes übertragen werden. Auch hierbei werden aber, dem Grundgedanken der vorgestellten Lösung folgend, HAPs des Mobilfunknetz (das heißt mindestens eine HAP) in die Verteilung der Entropie, respektive der Zufallszahlen hoher Entropie, einbezogen.

Den vorstehenden Ausführungen zufolge ist ein zur Durchführung des beschriebenen Verfahrens geeignetes Kommunikationsnetz, welches als ein Mobilfunknetz ausgebildet ist oder ein Mobilfunknetz umfasst sowie eine Mehrzahl von Netzelementen, nämlich Netzwerkeinrichtungen und Endgeräte, aufweist, dadurch charakterisiert, dass es neben mindestens eine Entropiequelle mindestens ein Netzelement zur Verteilung der durch die Entropiequelle bereitgestellten Zufallszahlen und der sie bezeichnenden Identifikatoren sowie einer Mehrzahl Zufallszahlen und Identifikatoren empfangenden Netzelementen aufweist. Zu dem genannten Mobilfunknetz gehört dabei mindestens eine HAP, nämlich eine mit Netzwerkeinrichtungen des Mobilfunks ausgestattete High Altitude Platform, umfasst. Diese HAP, respektive mindestens eine von mehreren HAPs des Mobilfunknetztes ist dabei dazu ausgebildet, durch eine Entropiequelle generierte Zufallszahlen hoher Entropie sowie zugehörige, diese jeweils eindeutig bezeichnende Identifikatoren über eine Mobilfunkverbindung, vorzugsweise über einen Broadcastkanal des Mobilfunknetzes oder über physikalisch geteilte Kanäle des Mobilfunknetz-Protokollstacks an andere Netzelemente des Mobilfunknetzes auszusenden. Darüber hinaus sind mindestens einige der Zufallszahlen und Identifikatoren empfangenden Netzelemente des Kommunikationsnetzes dazu ausgebildet, diese über eine sie verteilende HAP und eine Mobilfunkverbindung des Mobilfunknetzes zu empfangen.

Gemäß einer bevorzugten, dem bereits bei der Beschreibung des Verfahrens angesprochen, im Vordergrund stehenden Aspekt der vorgestellten Lösung Rechnung tragenden Ausbildungsform handelt es sich zudem bei einigen Netzelementen des Kommunikationsnetzes um gemeinsame Nutzschlüssel zur quantensicheren Verschlüsselung lokal und somit dezentral erzeugende Netzelemente. Jeweils zwei oder mehr solcher gemeinsame Nutzschlüssel aus den Zufallszahlen erzeugender Netzelemente des Kommunikationsnetzes sind dabei dazu ausgebildet, jeweils aus mindestens einer von ihnen empfangenen Zufallszahl, nämlich derselben Zufallszahl, in gleicher Weise unter Anwendung eines Shared Secret, das heißt eines bei diesen Netzelementen vorliegenden gemeinsamen Geheimnisses, mit Hilfe einer Key Derivation Function (KDF) einen identischen Schlüssel zu erzeugen. Sie sind ferner dazu ausgebildet, die mindestens eine zur Erzeugung eines jeweiligen Nutzschlüssels verwendete Zufallszahl oder mindestens eine von mehreren hierfür verwendeten Zufallszahlen von einer HAP über das Mobilfunknetz zu empfangen.

Wie bereits früher ausgeführt, kann das vorgenannte Shared Secret, also das gemeinsame Geheimnis mindestens zweier identische Nutzschlüssel erzeugender Netzelemente, bereits durch die dafür verwendete identische (nur den betreffenden Netzelementen bekannte) KDF selbst gegeben sein. Vorzugsweise, nämlich zur Erhöhung der Sicherheit des Verfahrens, werden jedoch die gemeinsame Schlüssel erzeugenden Netzelemente zu ihrer Ertüchtigung für die Durchführung des Verfahrens mit einem vorverteilten, das heißt mit einem Pre-shared Secret ausgestattet. Im Falle dessen, dass es sich bei den Netzelementen beispielsweise um Endgeräte handelt, kann es sich bei einem solchen Pre-shared Secret um eine zum Beispiel in eine SIM-Karte eingeschriebene Zeichenfolge, das heißt insbesondere ebenfalls um eine Zufallszahl, handeln.

Die Netzelemente können hierbei das Pre-shared Secret beispielsweise im Zusammenhang mit einer Anmeldeprozedur zur Nutzung des beschriebenen Verfahrens von zentraler Stelle beziehen, wobei auch die Anmeldeprozedur selbst quantensicher sein sollte. Darüber hinaus kann es sich aber auch um ein zwischen den Betreibern oder Nutzern der betreffenden Netzelemente auf privater Ebene vereinbartes und zum Beispiel in eine Konfigurationsdatei eingeschriebenes gemeinsames Geheimnis handeln. Insbesondere im Hinblick auf geeignete Datenträger für die Aufnahme eines entsprechenden gemeinsamen Geheimnisses, respektive Pre-shared Secret, kann es sich neben den vorgenannten SIM-Karten im Grunde um beliebige Datenträger, wie beispielsweise Smartkarten, USB-Sticks oder dergleichen, handeln.

Wie bereits im Zusammenhang mit dem Verfahren ausgeführt, kann das zu dessen Durchführung geeignete Kommunikationsnetz mindestens eine zur Verteilung von Zufallszahlen hoher Entropie ausgebildete HAP umfassen, welche neben den Netzwerkeinrichtungen für das Mobilfunknetz mit einer Entropiequelle ausgestattet ist. Darüber hinaus kann in das Kommunikationsnetz aber mindestens ein, demgemäß Netzwerkeinrichtungen zur Übertragung von Daten in dem Kommunikationsnetz aufweisender Satellit einbezogen sein. Durch einen derartigen oder mehrere solcher Satelliten wird folglich eine zusätzliche räumliche Netzwerkebene ausgebildet.

Auch kann dabei mindestens eine Entropiequelle oder mindestens eine von mehreren Entropiequellen durch einen solchen in das Kommunikationsnetz einbezogenen Satelliten mitgeführt werden. Mindestens eine Entropiequelle kann ferner in einer Basisstation des Mobilfunknetzes angeordnet sein. Auf diese Weise entsteht gewissermaßen eine Art "höhenhirarchisches" System, mit einer Netzwerkebene auf der Erdoberfläche, mit einer durch HAPs eines Mobilfunknetzes gebildeten Netzwerkebene und mit einer darüber befindlichen, mittels mit Netzwerkeinrichtungen ausgestatteter Satelliten gebildeten Netzwerkebene, zur Erzeugung und Verteilung von Zufallszahlen.

Ein zum Kommunikationsnetz gehörender, selbst nicht mit einer Entropiequelle ausgestatteter Satellit kann außerdem als "Trusted Node" (vertrauenswürdiger Knoten) oder als "Orbital HSM" (HSM = hardware secured module) fungieren, dem Zufallszahlen mit einer ID (Identifikator) zum Beispiel von einer eine solche Entropiequelle beherbergenden HAP oder von einem anderen eine Entropiequelle mit sich führenden Satelliten oder von einer Basisstation (des Mobilfunknetzes) mit Entropiequelle zugeführt werden. Ein solcher Satellit kann die ihm von der jeweiligen Entropiequelle zugeführten Zufallszahlen dann an ganz anderer Stelle auf seinem Weiterflug wieder an HAPs aussenden, welche diese wiederum an Netzelemente, beispielsweise in Form mobiler Einrichtungen, weiterleiten. Dabei könnte die betreffenden Zufallszahlen gegebenenfalls auch nur auf diesem Weg an Netzelemente in der Zielregion übermittelt und so kaum abgehört werden. Die Erzeugung und Nutzung der Zufallszahlen wäre hierbei örtlich unterschiedlich und zeitlich begrenzt, was zu einer Erhöhung der Sicherheit des Systems sowie des Verfahrensablaufs führt. Das über die Satelliten wird eine globale Verteilung der Zufallszahlen sichergestellt, wobei Bodenstation/Basisstationen und HAPs geographisch stationär sind und die Satelliten als LEO (LEO = Low Earth Orbiter) mehrere Teilnetze des Kommunikationsnetzes überspannen. Das wiederum ist eine weitere Spielart von "disjoint networks" (physisch nicht zusammenhängender Netzwerke/Teilnetze), bei welcher einerseits die Zufallszahlen terrestrisch über physikalische Kanäle, wie beispielsweise auch Leitungen, versendet werden, wohingegen sie der Satellit im Orbit gewissermaßen von selbst um die Welt transportiert.

Hinsichtlich der Art der auch schon zum Verfahren angesprochenen Entropiequelle oder einzelner solcher von dem Kommunikationsnetz umfasster Entropiequellen kommen mehrere Möglichkeiten in Betracht. So kann es sich hierbei beispielsweise um einen Quantum Random Number Generator (QRNG) handeln.

Möglich ist es aber auch, dass eine Entropiequelle in Form eines Sensors ausgebildet ist, der Entropie aus physikalischen Gegebenheiten im Umfeld der die Entropiequelle aufnehmenden HAP oder Basisstation oder des sie mit sich führenden Satelliten bezieht. Zu denken ist hierbei beispielsweise an ein Mikrofon, welches atmosphärisches Rauschen aus der Umgebung aufnimmt und aus der Signalamplitude zufällige Zahlen mit hoher Entropie erzeugt. Auch eine Kamera, welche Bilder des Himmels und/oder, im Falle der Anordnung der Entropiequelle in einer HAP oder in einem Satelliten, von der Erdoberfläche aufnimmt, also Bilder von dem sich ständig verändernden Umfeld, kommt insoweit als Sensor in Betracht, aus dessen Ausgangssignalen Zufallszahlen erzeugt werden können. Ein weiteres mögliches Beispiel für einen solchen Sensor ist ein Mobilfunkempfänger, welcher beispielsweise das Rauschen eines Kanals zwischen der HAP und einer Basisstation des Mobilfunknetzes zur Berechnung von Zufallszahlen ausnutzt.

Unabhängig von ihrer Zugehörigkeit zu einem Mobilfunknetz können die HAPs, insbesondere die Zufallszahlen verteilende HAPs, außerdem untereinander direkt vernetzt sein, also gewissermaßen ein eigenes Netz, nämlich ein Netz von HAPs, ausbilden. Bei den hierzu zwischen diesen HAPs zum Zwecke eines schnellen Austauschs von Zufallszahlen hoher Entropie innerhalb des HAP-Netzes bestehenden Verbindungen muss es sich nicht um Funk- beziehungsweise Mobilfunk-Verbindungen handeln. Ein eigenständiges Netz zwischen den HAPs kann beispielsweise auch durch optische Verbindungen zwischen sich in einer Line of Sight (LOS) befindenden HAPs ausgebildet werden.

Ein solches die HAPs untereinander verbindendes Netzwerk kann zum Beispiel als nationales Netzwerk errichtet werden. In weiterer Ausbildung kann das die HAPs untereinander unabhängig von dem Mobilfunknetz verbindende Netz auch mit einem Netz untereinander vernetzter Satelliten verbunden sein. Hierdurch entsteht ein Netzwerk mit zwei Ebenen zur Verteilung von Zufallszahlen hoher Entropie, wobei am Boden befindliche Netzelemente des Mobilfunknetzes die mit Hilfe dieses Netzwerks verteilten Zufallszahlen vorzugsweise wiederum über die dazu ausgebildeten HAPs empfangen. Gewissermaßen als dritte Netzwerkebene können ferner noch Basisstationen des Mobilfunknetzes und das glasfaserbasierte Kernnetz am Boden in das Verteilungsnetzwerk zur Verteilung der Zufallszahlen einbezogen werden. Die drei Ebenen werden gebildet durch die Ebene der Basisstationen, die Ebene der HAPs und die Ebene der Satelliten. Dies ist letztlich auch der Grund, warum ausgeführt wurde, dass Nutzschlüssel lokal erzeugende Netzelemente (am Boden) die zur Erzeugung der Nutzschlüssel verwendeten Zufallszahlen unmittelbar oder mittelbar über eine diese verteilende HAP empfangen.

Die zuvor angesprochene Verteilungsstruktur mit drei Netzwerkebenen (Netzwerkebene der HAPs, Netzwerkebene untereinander vernetzter Satelliten und Netzwerkebene der am Boden befindlichen Basisstationen mit zugehörigem Core-Netz, respektive Kernnetz) ermöglicht es, die von einer Entropiequelle generierten Zufallszahlen über disjunkte Wege den sie zur lokalen Erzeugung von Nutzschlüsseln benötigende Netzelementen zuzuführen. Werden nun zur Erzeugung eines Nutzschlüssels mehrere statt nur einer Zufallszahl verwendet, wobei diese mehreren Zufallszahlen über disjunkte Wege der zuvor dargestellten Verteilungsstruktur geführt werden, so lässt sich hierdurch ein zusätzlicher Sicherheitsgewinn erzielen.

Unter Nutzung dieser Verteilungsstruktur können mehrere Zufallszahlen an einer Entropiequelle erzeugt und auf unterschiedlichen Pfaden (im Weltraum, in der Atmosphäre und auf der Erde) an die Empfänger, respektive an Netzelemente, verteilt werden. Die sie schließlich empfangenden Netzelemente kombinieren zum Beispiel die Zufallszahlen und berechnen über eine KDF einen Nutzschlüssel als privaten Schlüssel. Eine Zufallszahl kann aber auch in mehrere Teile zerlegt und über verschiedene diskunkte Pfade an die Empfänger übertragen werden. Die sie verarbeitenden Netzelemente nutzen ein Verfahren, welches "Shamir Key Sharing" (Shamir) genannt wird, um aus den empfangenen (Teil)-Zahlenfolgen einen privaten Schlüssel, respektive Nutzschlüssel zu berechnen. Das Verfahren von Shamir hat hierbei den Vorteil, dass auch bei Ausfall von Pfaden noch ein gemeinsamer privater Nutzschlüssel berechnet werden kann.

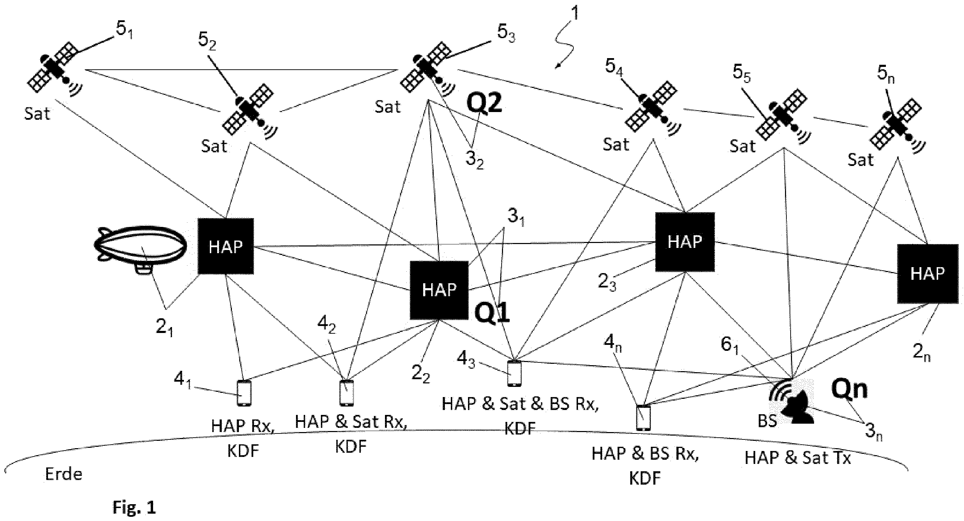

Die Fig. 1 zeigt beispielhaft in einer schematischen Darstellung eine mögliche Ausbildungsform des zur Lösung der Aufgabe vorgeschlagenen Kommunikationsnetzes 1 unter Veranschaulichung der in dem Netz erfolgenden Verteilung von Zufallszahlen hoher Entropie. Entsprechende Zufallszahlen dienen - worauf bei der weiteren Erläuterung des Ausführungsbeispiels Bezug genommen werden soll - vorzugsweise (also nicht zwingend) zur lokalen Erzeugung von Nutzschlüsseln für den quantensicheren Schutz von Netzverkehren oder Anwendungsdaten. Die dezentrale, respektive lokale Erzeugung der Nutzschlüssel erfolgt durch sich in der Regel auf der Erdoberfläche befindende Netzeinrichtungen 4₁; 4₂; 4ₙ, bei denen es sich, anders als dies die symbolhafte Graphik vermittelt, nicht zwingend um Endgeräte handeln muss. Jedoch handelt es sich bei diesen Netzelementen 4₁; 4₂; 4ₙ um Netzelemente 4₁; 4₂; 4ₙ, welche zumindest mit einer Empfangseinrichtung (Rx) für den Mobilfunk ausgestattet und somit Teil eines von dem Kommunikationsnetz umfassten Mobilfunknetzes sind. Hierbei können die betreffenden Netzelemente 4₁; 4₂; 4ₙ mit Empfangseinrichtungen (Rx) zum Empfang von Daten (einschließlich Zufallszahlen und Identifikatoren) von mindestens einer HAP 2₁; 2₂; 2ₙ (HAP Rx) oder mit Empfangseinrichtungen Rx zum Empfang von Daten von mindestens einer HAP 2₁; 2₂; 2ₙ sowie von mindestens einem Satelliten 5₁; 5₂; 5ₙ (HAP & Sat Rx) oder mit Empfangseinrichtungen Rx zum Empfang von Daten von mindestens einer HAP 2₁; 2₂; 2ₙ, von mindestens einem Satelliten 5₁; 5₂; 5ₙ sowie von mindestens einer Basisstation des Mobilfunknetzes (HAP & Sat & BS Rx) oder mit Empfangseinrichtungen Rx zum Empfang von Daten von mindestens einer HAP 2₁; 2₂; 2ₙ sowie von mindestens einer Basisstation 6₁; 6ₙ des Mobilfunknetzes (HAP & BS Rx) ausgestattet sein.

Darüber hinaus können die betreffenden Netzelemente 4₁; 4₂; 4ₙ aber selbstverständlich außerdem mit einer Sendeeinrichtung (Tx) für den Mobilfunk ausgestattet sein. Ein nicht mit einer Sendeeinrichtung für den Mobilfunk ausgestattetes Netzelement 4₁; 4₂; 4ₙ wiederum kann zum Beispiel gleichzeitig in ein (hier nicht gezeigtes) Festnetz einbezogen sein und die von ihm erzeugten Nutzschlüssel in diesem Festnetz verteilen. Die erzeugten Nutzschlüssel verwendende Netzelemente (also gegebenenfalls auch Endgeräte des Festnetzes) können dann unter Verwendung der Nutzschlüssel quantensicher verschlüsselt Daten mit anderen Netzelementen des Kommunikationsnetzes 1 austauschen, welche ihrerseits dieselben (gemeinsam genutzten) Nutzschlüssel von einem anderen, diese unabhängig erzeugenden Netzelement 4₁; 4₂; 4ₙ beziehen.

Mindestens eine oder mehrere zur Erzeugung der Nutzschlüssel verwendete Zufallszahlen hoher Entropie beziehen die Netzelemente 4₁; 4₂; 4ₙ von mindestens einer der mit Q1 bis Qn bezeichneten Entropiequellen 3₁; 3₂; 3ₙ, wobei in die Verteilung dieser Zufallszahlen, dem Grundgedanken der vorstehenden Lösung folgend, HAPs 2₁; 2₂; 2ₙ (High Altitude Platforms) einbezogen sind. Insbesondere sofern zur Erzeugung eines jeweiligen der Nutzschlüssel unter Nutzung einer entsprechenden KDF (Key Derivation Function) mehrere Zufallszahlen verwendet werden können die Zufallszahlen erzeugenden Netzelemente 4₁; 4₂; 4ₙ diese auch über disjunkte Pfade des Kommunikationsnetzes 1 beziehen.

Durch die beispielhaft gezeigte Ausbildungsform des Kommunikationsnetzes 1 wird hierbei gewissermaßen eine "höhenhirarchisches" Verteilungssystem für die Zufallszahlen realisiert. Dieses umfasst im Grunde drei Verteilungsebenen, wobei neben den HAPs 2₁; 2₂; 2ₙ auf der mittleren Ebene dieses Verteilungssystems in die Verteilung von Zufallszahlen zur lokalen Schlüsselerzeugung auch Satelliten Sat 5₁; 5₂; 5ₙ auf der obersten Verteilungsebene und Basisstationen BS 6₁; 6ₙ (beispielhaft gezeigt ist hier nur eine) des von dem Kommunikationsnetz 1 umfassten Mobilfunknetzes einbezogen werden. Wie aus der Figur ersichtlich können im Falle einer Verwendung mehrerer Zufallszahlen zur Erzeugung eines jeweiligen Nutzschlüssels auch entsprechende Entropiequellen Q1 bis Qn 3₁; 3₂; 3ₙ an unterschiedlichen Stellen (auf unterschiedlichen Ebenen) des Systems angeordnet, respektive ausgebildet sein. Entsprechende Entropiequellen 3₁; 3₂; 3ₙ können hierbei in einer HAP 2₁; 2₂; 2ₙ oder in mehreren HAPs 2₁; 2₂; 2ₙ, in einem oder mehreren Satelliten 5₁; 6₂; 5ₙ, in einer Bodenstation/Basisstation BS 6₁; 6ₙ oder in mehreren Basisstationen ausgebildet sein. Abweichend von der Fig. 1 muss zudem auch nicht zwingend eine Entropiequelle 3₁; 3₂; 3ₙ in einer der HAPs ausgebildet sein.

## Patentansprüche

1. Verfahren zur Nutzung einer quantensicheren Kommunikation in einem Kommunikationsnetz (1) unter Verwendung in dem Kommunikationsnetz verteilter Zufallszahlen hoher Entropie, welche durch mindestens eine Zufallszahlen und jede dieser Zufallszahlen eindeutig bezeichnende Identifikatoren bereitstellende Entropiequelle (3₁; 3₂; 3ₙ) generiert werden, **dadurch gekennzeichnet, dass** in die Verteilung der Zufallszahlen und der sie bezeichnenden Identifikatoren an Netzelemente (4₁; 4₂; 4ₙ), nämlich Netzwerkeinrichtungen oder Endgeräte, des Kommunikationsnetzes (1) mindestens eine Höhenplattform HAP (2₁; 2₂; 2ₙ), das heißt eine High Altitude Platform, eines das Kommunikationsnetz (1) ausbildenden oder von diesem umfassten Mobilfunknetzes einbezogen wird, wobei mindestens einige Netzelemente (4₁; 4₂; 4ₙ) eine Zufallszahl oder mindestens eine von mehreren Zufallszahlen zusammen mit dem sie jeweils bezeichnenden Identifikator über eine solche Zufallszahlen verteilende HAP (2₁; 2₂; 2ₙ) und eine Mobilfunkverbindung empfangen.

2. Verfahren nach Anspruch 1 ,**dadurch gekennzeichnet, dass** mittels der in dem Kommunikationsnetz (1) verteilten Zufallszahlen hoher Entropie in dem Kommunikationsnetz (1) zu verwendende Nutzschlüssel erzeugt werden, wobei ein jeweiliger Nutzschlüssel, nämlich ein durch Netzelemente (4₁; 4₂; 4ₙ) des Kommunikationsnetzes zur quantensicheren Verschlüsselung von Daten auf der Anwendungsebene und/oder zur quantensicheren Netzkommunikation gemeinsam genutzter Schlüssel, identisch von mehreren Netzelementen (4₁; 4₂; 4ₙ) in gleicher Weise dezentral unter Anwendung eines Shared Secret, nämlich eines bei ihnen vorliegenden gemeinsamen Geheimnisses, mit Hilfe einer Key Derivation Function KDF aus mindestens einer Zufallszahl erzeugt wird.

3. Verfahren nach Anspruch 2, **dadurch gekennzeichnet, dass** die mindestens eine Zufallszahl oder mindestens eine von mehreren der zur Erzeugung eines jeweiligen Nutzschlüssels verwendeten Zufallszahlen von Nutzschlüssel erzeugenden Netzelementen (4₁; 4₂; 4ₙ) unmittelbar oder mittelbar von einer Zufallszahlen verteilenden Höhenplattform HAP (2₁; 2₂; 2ₙ) empfangen wird.

4. Verfahren nach einem der Ansprüche 1 bis 3, **dadurch gekennzeichnet, dass** die mindestens eine Zufallszahlen hoher Entropie verteilende HAP (2₁; 2₂; 2ₙ) eine jeweilige Zufallszahl über einen Broadcastkanal des Mobilfunknetzes oder über physikalisch geteilte Kanäle des Mobilfunknetz-Protokollstacks an die sie empfangenden Netzelemente (4₁; 4₂; 4ₙ) aussendet.

5. Verfahren nach einem der Ansprüche 1 bis 4, **dadurch gekennzeichnet, dass** in die Verteilung der Zufallszahlen mit Netzwerkeinrichtungen ausgestattete Satelliten (5₁; 5₂; 5ₙ) und/oder Bodenstationen, das heißt Basisstationen (6₁; 6ₙ) des Mobilfunknetzes einbezogen werden.

6. Verfahren nach einem der Ansprüche 1 bis 5, **dadurch gekennzeichnet, dass** Zufallszahlen hoher Entropie und sie bezeichnende Identifikatoren durch eine Entropiequelle (3₁; 3₂; 3ₙ) mindestens einer Zufallszahlen verteilenden HAP (2₁; 2₂; 2ₙ) erzeugt werden.

7. Verfahren nach einem der Ansprüche 1 bis 6, **dadurch gekennzeichnet, dass** Zufallszahlen hoher Entropie und sie bezeichnende Identifikatoren durch eine von mindestens einem in das Kommunikationsnetz (1) eingebundenen Satelliten (5₁; 5₂; 5ₙ) mitgeführte Entropiequelle (3₁; 3₂; 3ₙ) erzeugt werden.

8. Verfahren nach einem der Ansprüche 1 bis 7, **dadurch gekennzeichnet, dass** Zufallszahlen hoher Entropie und sie bezeichnende Identifikatoren durch eine als Teil mindestens einer Basisstation (6₁; 6ₙ) des Mobilfunknetzes ausgebildete Entropiequelle (3₁; 3₂; 3ₙ) erzeugt werden.

9. Verfahren nach einem der Ansprüche 2 bis 8, **dadurch gekennzeichnet, dass** durch die Nutzschlüssel erzeugenden Netzelemente (4₁; 4₂; 4ₙ) zur Erzeugung jeweils eines Nutzschlüssels mehrere, von ihnen über disjunkte Netzwerkpfade empfangene Zufallszahlen hoher Entropie verwendet werden, von denen ihnen mindestens eine über eine HAP (2₁; 2₂; 2ₙ) des Mobilfunknetzes zugeführt wird.

10. Kommunikationsnetz (1), nämlich als ein Mobilfunknetz ausgebildetes oder ein Mobilfunknetz umfassendes Kommunikationsnetz (1), mit
- mindestens einer Zufallszahlen hoher Entropie und eine jeweilige dieser Zufallszahlen eindeutig bezeichnende Identifikatoren bereitstellenden Entropiequelle (3₁; 3₂; 3ₙ),
- mindestens einem Netzelement zur Verteilung der durch die Entropiequelle bereitgestellten Zufallszahlen und der sie bezeichnenden Identifikatoren,
- einer Mehrzahl Zufallszahlen und Identifikatoren empfangenden Netzelementen (4₁; 4₂; 4ₙ), das heißt Netzwerkeinrichtung und/oder Endgeräten, wobei das Mobilfunknetz neben sich am Boden befindenden Netzwerkeinrichtungen, wie mindestens eine Basisstationen (6₁; 6ₙ), mindestens eine mit Netzwerkeinrichtungen ausgestatte Höhenplattform HAP (2₁; 2₂; 2ₙ), das heißt eine High Altitude Platform, umfasst, **dadurch gekennzeichnet, dass**
a.) die mindestens eine HAP (2₁; 2₂; 2ₙ) oder mindestens eine von mehreren HAPs (2₁; 2₂; 2ₙ) des Mobilfunknetzes dazu ausgebildet ist, durch die mindestens eine Entropiequelle (3₁; 3₂; 3ₙ) generierte Zufallszahlen hoher Entropie mit zugehörigen Identifikatoren über das Mobilfunknetz an Netzelemente des Kommunikationsnetzes auszusenden,
b.) mindestens einige der Zufallszahlen und Identifikatoren empfangenden Netzelemente (4₁; 4₂; 4ₙ) dazu ausgebildet sind, diese über eine sie verteilende HAP und eine Mobilfunkverbindung des Mobilfunknetzes zu empfangen.

11. Kommunikationsnetz (1) nach Anspruch 10, **dadurch gekennzeichnet, dass** mindestens einige der Zufallszahlen hoher Entropie und Identifikatoren empfangenden Netzelemente (4₁; 4₂; 4ₙ) dazu ausgebildet sind, mit Hilfe einer Key Derivation Function KDF und unter Anwendung eines Shared Secret aus mindestens einer Zufallszahl voneinander unabhängig einen identischen Nutzschlüssel, nämlich einen durch Netzelemente des Kommunikationsnetzes (1) zur quantensicheren Verschlüsselung von Daten auf der Anwendungsebene und/oder zur quantensicheren Netzkommunikation gemeinsam genutzten Schlüssel zu erzeugen.

12. Kommunikationsnetz (1) nach Anspruch 10 oder 11, **dadurch gekennzeichnet, dass** dieses mindestens einen mit Netzwerkeinrichtungen ausgestatteten Satelliten (5₁; 5₂; 5ₙ) umfasst, wobei hierdurch in Bezug auf den Abstand zur Erdoberfläche eine zusätzliche räumliche Netzwerkebene ausgebildet ist, welche zumindest in die Verteilung von Zufallszahlen hoher Entropie einbezogen ist.

13. Kommunikationsnetz (1) nach einem der Ansprüche 10 bis 12, **dadurch gekennzeichnet, dass** die mindestens eine Entropiequelle (3₁; 3₂; 3ₙ) oder eine mindestens eine von mehreren Entropiequellen (3₁; 3₂; 3ₙ)
- von einer HAP (2₁; 2₂; 2ₙ) des Mobilfunknetzes mitgeführt wird, bei welcher es sich auch um eine der Verteilung von Zufallszahlen dienende HAP (2₁; 2₂; 2ₙ) handelt,
oder,
- sofern das Kommunikationsnetz mindestens einen mit Netzwerkeinrichtungen ausgestatteten Satelliten (5₁; 5₂; 5ₙ) umfasst, von einem Satelliten (5₁; 5₂; 5ₙ) mitgeführt wird
oder
- als Teil einer Basisstation (6₁; 6ₙ) des Mobilfunknetzes ausgebildet ist.

14. Kommunikationsnetz (1) nach einem der Ansprüche 10 bis 13, **dadurch gekennzeichnet, dass** es sich bei der mindestens einen Entropiequelle (3₁; 3₂; 3ₙ) oder bei mindestens einer von mehreren Entropiequellen (3₁; 3₂; 3ₙ) um einen Zufallszahlengenerator QRNG handelt.

15. Kommunikationsnetz (1) nach einem der Ansprüche 10 bis 14, **dadurch gekennzeichnet, dass** die mindestens eine Entropiequelle (3₁; 3₂; 3ₙ) oder mindestens eine von mehreren Entropiequellen (3₁; 3₂; 3ₙ) mindestens einen Sensor zur wiederholten Erfassung mindestens einer sich zeitlich zufällig verändernden physikalischen Größe umfasst sowie Einrichtungen, welche aus dem zeitlichen Verlauf dieser physikalischen Größe Zufallszahlen berechnen.

16. Kommunikationsnetz (1) nach Anspruch 15, **dadurch gekennzeichnet, dass** es sich bei dem mindestens einen Sensor oder bei mindestens einem von mehreren Sensoren der Entropiequelle (3₁; 3₂; 3ₙ) um einen Sensor zum Empfang des atmosphärischen Rauschens handelt.

17. Kommunikationsnetz (1) nach Anspruch 15 oder 16, **dadurch gekennzeichnet, dass** es sich bei dem mindestens einen Sensor oder bei mindestens einem von mehreren Sensoren der Entropiequelle (3₁; 3₂; 3ₙ) um einen optischen Sensor zur bildlichen Erfassung des Himmels und/oder der Erdoberfläche handelt.
